# EUROPÄISCHE PATENTSCHRIFT

(11) **EP 3 375 136 B1**
(45) Veröffentlichungstag und Bekanntmachung des Hinweises auf die Patenterteilung: **26.06.2019**
(21) Anmeldenummer: 16791541.2
(22) Anmeldetag: 21.10.2016
(51) Int. Cl.: H04L 12/12

(54) **ETHERNET-BUS, STEUERGERÄT UND VERFAHREN ZUM AUFWECKEN EINES STEUERGERÄTS EINES ETHERNET-BUSSES**
ETHERNET BUS, CONTROLLER AND METHOD FOR WAKING UP A CONTROLLER OF AN ETHERNET BUS
BUS ÉTHERNET, UNITÉ DE COMMANDE ET PROCÉDÉ DE RÉVEIL D'UN DISPOSITIF DE COMMANDE D'UN BUS-ETHERNET

(30) Priorität: 10.11.2015 DE 102015222112
(43) Veröffentlichungstag der Anmeldung: 19.09.2018
(73) Patentinhaber: Volkswagen Aktiengesellschaft, 38440 Wolfsburg (DE)
(72) Erfinder: KRIEGER, Olaf, 39291 Lostau (DE); CLAUS, Lothar, 38154 Königslutter (DE)
(86) Internationale Anmeldenummer: PCT/EP2016/075380
(87) Internationale Veröffentlichungsnummer: WO 2017/080792

(56) Entgegenhaltungen:
- EP-A1- 2 339 790
- EP-A1- 2 381 323
- US-A1- 2009 077 394
- US-A1- 2012 216 084

## Beschreibung

Die Erfindung betrifft einen Ethernet-Bus, ein Steuergerät und ein Verfahren zum Aufwecken eines Steuergeräts eines Ethernet-Busses.

Steuergeräte in einem Bussystem, insbesondere in einem Fahrzeugnetzwerk, sollen vorzugsweise nur aktiv sein, wenn deren Funktion benötigt wird. Ansonsten sollen diese deaktiviert sein und keinen nennenswerten Energiebedarf aufweisen. Für die Netzwerktechnologien CAN und FlexRay sind spezielle weckfähige Bustreiber spezifiziert, welche einen Spannungsregler eines Steuergerätes einschalten, sobald ein gültiges Signal auf dem Bus ist. Für Ethernet-Bussysteme existiert bisher kein solcher Standard.

Dabei wurde bereits vorgeschlagen, ein Wecksignal als differentielles Signal auf beiden Daten- bzw. Busleitungen aufzuprägen. Dies kann ein Wechselspannungssignal sein, das dem regulären Kommunikationssignal gleicht oder eine Gleichspannung sein. Die Schaltungen zum Aufprägen sowie zum Detektieren des Wecksignals können die Symmetrie und damit die Übertragungseigenschaften negativ beeinflussen.

US 2009/077394 beschreibt ein verwaltetes Energiesystem mit einem Kommunikations-Subsystem und einem Rechen-Subsystem. Das Kommunikations-Subsystem umfasst ein Netzwerkzustandsmodul, das Kommunikationsleistungszustandsinformationen ermittelt und eine Energiemanagement-Nachricht mit den Kommunikationsleistungszustandsinformationen sendet. Das System kann ferner ein Energieverwaltungsmodul umfassen, um die Energieverwaltungsnachricht zu empfangen, die Kommunikationsleistungszustandsinformationen von der Energieverwaltungsnachricht abzurufen und Energiezustände für das Rechen-Subsystem basierend auf den Kommunikationsleistungszustandsinformationen zu verwalten.

Der Erfindung liegt das technische Problem zugrunde, einen Ethernet-Bus sowie ein Steuergerät zu schaffen, mittels derer ein Steuergerät ohne Beeinflussung der Symmetrie aufweckbar ist, sowie ein Verfahren zum Aufwecken eines Steuergeräts eines Ethernet-Busses zur Verfügung zu stellen.

Die Lösung des technischen Problems ergibt sich durch ein Steuergerät mit den Merkmalen des Anspruchs 1, ein Ethernet-Bus mit den Merkmalen des Anspruchs 5 sowie ein Verfahren mit den Merkmalen des Anspruchs 11. Weitere vorteilhafte Ausgestaltungen der Erfindung ergeben sich aus den Unteransprüchen.

Der Ethernet-Bus umfasst mindestens zwei Steuergeräte. Ein Steuergerät kann dabei auch ein Switch sein. Die Steuergeräte weisen jeweils einen Bustreiber und einen Mikroprozessor auf, wobei mindestens ein erstes Steuergerät einen Spannungsregler aufweist, der mindestens zwei Spannungswerte für die Betriebsspannung des Steuergerätes einstellen kann. Dabei ist ein erster Spannungswert für einen Betriebszustand "Schlafen" oder deaktiviert und der zweite Spannungswert für einen Betriebszustand "Kommunikation" oder "wach" oder aktiviert vorgesehen. Die Bustreiber sind jeweils über mindestens zwei Busleitungen miteinander verbunden. An den Busleitungen ist jeweils ein Terminierungsnetzwerk angeschlossen, das Bestandteil des jeweiligen Steuergeräts ist. Das Terminierungsnetzwerk weist mindestens zwei Widerstände und einen Kondensator auf, wobei die beiden Widerstände mit jeweils einer Busleitung verbunden sind und an einem Mittelabgriff des Terminierungsnetzwerkes miteinander verbunden sind, wobei der Kondensator des Terminierungsnetzwerkes zwischen Mittelabgriff und Masse angeordnet ist. Der Ethernet-Bus weist mindestens ein Aufwachmodul auf, das derart ausgebildet ist, dass in Abhängigkeit eines Aufwachereignisses ein Spannungssignal erzeugt wird, um die Spannung am Mittelabgriff des Steuergerätes mit dem Spannungsregler zu verändern. Dabei ist dem mindestens einen Spannungsregler eine Schaltung zugeordnet, mittels derer der Spannungsregler in Abhängigkeit der Spannung am Mittelabgriff vom ersten Spannungswert auf den zweiten Spannungswert geregelt wird und somit aufgeweckt bzw. aktiviert wird. Dabei wird die Symmetrie der Datenübertragung nicht beeinflusst. Dabei kann vorgesehen sein, dass die Spannung am Ausgang des Aufwachmoduls nur für eine vorbestimmte Zeit vorhanden sein muss und dann wieder abgeschaltet werden kann, wobei der Spannungsregler auf dem zweiten Spannungswert eingestellt bleibt, oder aber die Spannung am Ausgang des Aufwachmoduls liegt permanent an, solange das Steuergerät aktiv bleiben soll.

In einer Ausführungsform weist auch das zweite Steuergerät einen Spannungsregler mit zwei Spannungswerten auf, dem eine Schaltung zugeordnet ist, um die Spannung am Mittelabgriff für den Spannungsregler auszuwerten. Somit kann auch das zweite Steuergerät deaktiviert werden, wobei dieses durch Aufwecken des ersten Steuergeräts automatisch mitaufgeweckt wird, da eine Änderung der Spannung am Mittelabgriff des ersten Steuergeräts über die Busleitungen auch zu einer Änderung der Spannung am Mittelabgriff des anderen Steuergeräts führt.

In einer weiteren Ausführungsform weist auch das zweite Steuergerät ein Aufwachmodul auf.

In einer weiteren Ausführungsform ist das Aufwachmodul und/oder die Schaltung in das Steuergerät integriert.

In einer weiteren Ausführungsform weist die Schaltung einen Widerstand und einen Transistor auf, die einen Spannungsteiler bilden, wobei ein Steuereingang des Spannungsreglers mit einem Mittelabgriff des Spannungsteiles verbunden ist, wobei der Spannungsteiler zwischen einer Betriebsspannung und Masse liegt, wobei ein Steuereingang des Transistors mit dem Mittelabgriff des Terminierungsnetzwerkes verbunden ist. Somit kann das Aufwachmodul den Transistor durchschalten, was zu einer Änderung der Spannung am Mittelabgriff des Spannungsteiles führt und somit zum Schalten des Spannungsreglers, Dabei sei angemerkt, dass auch eine umgekehrte Logik möglich ist, dass beispielsweise die Spannung des Aufwachmoduls den Transistor sperrt. Die Betriebsspannung an der Schaltung muss dabei nicht gleich der Betriebsspannung des Steuergerätes sein.

In einer weiteren Ausführungsform ist dem Aufwachmodul mindestens ein Filter zugeordnet, um hochfrequente Gleichtaktstörungen zu unterdrücken. Beispielsweise ist hierzu eine Drossel oder ein Tiefpass am Ausgang des Aufwachmoduls angeordnet. Hierdurch wird verhindert, dass diese Gleichtaktstörungen versehentlich das Steuergerät aufwecken. Auch am Eingang des Aufwachmoduls kann ein Tiefpass angeordnet sein, um Eingangsstörungen zu unterdrücken.

Ein bevorzugtes Anwendungsgebiet ist der Einsatz in einem Kraftfahrzeug.

Die Erfindung wird nachfolgend anhand eines bevorzugten Ausführungsbeispiels näher erläutert. Die einzige Figur zeigt ein schematisches Blockschaltbild eines Teils eines Ethernet-Busses.

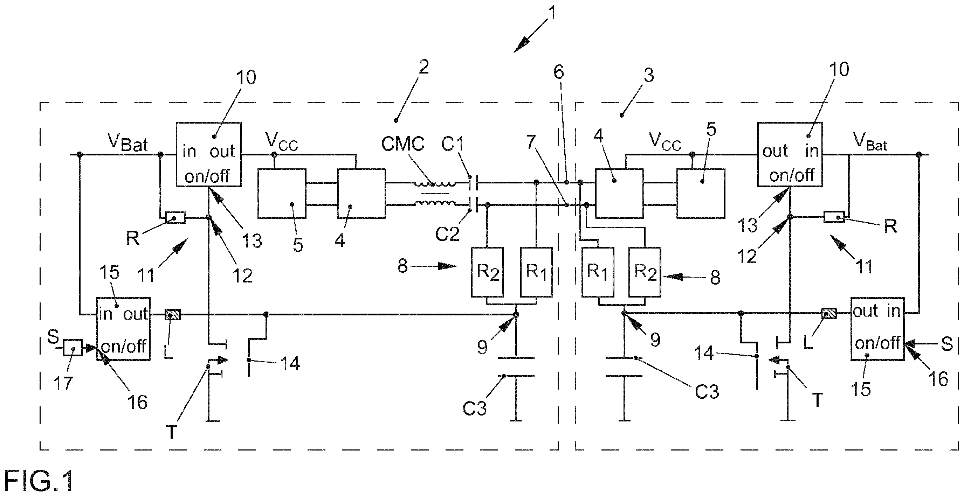

In der Fig. 1 ist ein Ethernet-Bus 1 mit einem ersten Steuergerät 2 und einem zweiten Steuergerät 3 dargestellt. Die Steuergeräte 2, 3 weisen jeweils einen Bustreiber 4 und einen Mikroprozessor 5 auf, wobei die Bustreiber 4 durch mindestens zwei Busleitungen 6, 7 miteinander verbunden sind. Die beiden Steuergeräte 2, 3 weisen jeweils ein Terminierungsnetzwerk 8 auf, bestehend aus zwei Widerständen R1, R2 und einem Kondensator C3. Dabei ist jeweils der Widerstand R1 mit der Busleitung 6 und der Widerstand R2 mit der Busleitung 7 verbunden, wobei die beiden Widerstände an einem Mittelabgriff 9 des Terminierungsnetzwerkes 8 miteinander verbunden sind. Zwischen dem Mittelabgriff 9 und Masse ist der Kondensator C3 angeordnet. Weiter weisen die beiden Steuergeräte 2, 3 Koppelkondensatoren C1, C2 auf, die an die Busleitungen 6, 7 geschaltet sind und zwischen Busleitung 6, 7 und Bustreiber liegen. Dabei sind die Koppelkondensatoren C1, C2 des zweiten Steuergerätes 3 nicht dargestellt. Weiter weisen die Steuergeräte 2, 3 eine Gleichtaktdrossel CMC auf, wobei die vom zweiten Steuergerät 3 ebenfalls nicht dargestellt ist. Die Steuergeräte 2, 3 weisen jeweils einen Spannungsregler 10 auf, der eine erste Betriebsspannung V_{BAT} in eine Betriebsspannung V_{CC} für das Steuergerät 2, 3 umsetzt. Dabei kann diese Betriebsspannung V_{CC} ausgeschaltet sein (erster Spannungswert) oder eingeschaltet sein (zweiter Spannungswert). Dem Spannungsregler 10 ist eine Schaltung 11 zugeordnet, die einen Widerstand R und einen Transistor T aufweist, die in Reihe zwischen der Betriebsspannung V_{BAT} und Masse liegen. Die Schaltung 11 bildet einen Spannungsteiler, wobei der Mittelabgriff 12 mit einem Steuereingang 13 des Spannungsreglers 10 verbunden ist. Ein Steuereingang 14 des Transistors T ist mit dem Mittelabgriff 9 des Terminierungsnetzwerkes 8 verbunden Weiter weisen die Steuergeräte 2, 3 jeweils ein Aufwachmodul 15 auf, das die Betriebsspannung V_{BAT} auf eine Ausgangsspannung umsetzt, die über eine Drossel L am Mittelabgriff 9 anliegt. Dabei weist das Aufnahmemodul 15 einen Steuereingang 16 auf, das in Abhängigkeit eines Aufwachereignisses S die Ausgangsspannung durchschaltet, wobei vor dem Steuereingang 16 noch ein Tiefpass 17 angeordnet sein kann.

Im deaktivierten Zustand ist der Transistor T gesperrt, sodass näherungsweise V_{BAT} am Steuereingang 13 des Spannungsreglers 10 anliegt. Soll nun das Steuergerät 2 aufgeweckt werden, so wird ein Signal S an dem Steuereingang 16 angelegt, wodurch die Ausgangsspannung des Aufwachmoduls 15 an den Mittelabgriff 9 anliegt und dessen Potential anhebt. Hierdurch steuert der Steuereingang 14 den Transistor T auf. Dadurch fällt die Betriebsspannung V_{BAT} über den Widerstand R ab und der Steuereingang 13 wird auf Masse gezogen. Dies bewirkt das Durchschalten der Betriebsspannung V_{CC} für den Mikroprozessor 5 und Bustreiber 4 (zweiter Spannungswert). Die Anhebung des Potentials am Mittelabgriff 9 des Steuergerätes 2 wird über die Busleitungen 6, 7 auf den Mittelabgriff 9 des zweiten Steuergerätes 3 übertragen, sodass dort analog der Spannungsregler 10 eingeschaltet wird.

## Patentansprüche

1. Steuergerät (2, 3) für ein Ethernet-Bus (1), umfassend einen Bustreiber (4), einen Mikroprozessor (5) und einen Spannungsregler (10), wobei der Spannungsregler (10) mindestens zwei Spannungswerte für die Betriebsspannung (V_{CC}) des Steuergerätes (2, 3) aufweist, wobei ein erster Spannungswert für einen Betriebszustand "Schlafen" und der zweite Spannungswert für einen Betriebszustand "Kommunikation" vorgesehen ist, wobei das Steuergerät (2, 3) ein Terminierungsnetzwerk (8) aufweist, das mindestens zwei Widerstände (R1, R2) und einen Kondensator (C3) aufweist,
**dadurch gekennzeichnet, dass**,
jeweils ein Widerstand (R1, R2) mit einem Anschluss für eine Busleitung (6, 7) verbunden ist und die beiden Widerstände (R1, R2) an einem Mittelabgriff (9) miteinander verbunden sind, wobei der Kondensator (C3) zwischen dem Mittelabgriff (9) und Masse angeordnet ist,
das Steuergerät (2, 3) ein Aufwachmodul (15) aufweist, dass einen Eingang (16) für ein Aufwachereignis (5) und einen Ausgang für den Mittelabgriff (9) des Terminierungsnetzwerks (8) aufweist,
wobei das Aufwachmodul (15) derart ausgebildet ist, dass in Abhängigkeit eines Aufwachereignisses (S) ein Spannungssignal erzeugt wird, um die Spannung am Mittelabgriff (9) des Steuergerätes (2) mit dem Spannungsregler (10) zu verändern, wobei dem mindestens einen Spannungsregler (10) eine Schaltung (11) zugeordnet ist, mittels derer der Spannungsregler (10) in Abhängigkeit der Spannung am Mittelabgriff (9) vom ersten Spannungswert auf den zweiten Spannungswert geregelt wird.

2. Steuergerät nach Anspruch 1, **dadurch gekennzeichnet, dass** das Aufwachmodul (15) im Steuergerät (2, 3) integriert ist.

3. Steuergerät nach Anspruch 1 oder Anspruch 2, **dadurch gekennzeichnet, dass** die Schaltung (11) einen Widerstand (R) und einen Transistor (T) aufweist, die einen Spannungsteiler bilden, wobei ein Steuereingang (13) des Spannungsreglers (10) mit einem Mittelabgriff (12) des Spannungsteilers verbunden ist, wobei der Spannungsteiler zwischen einer Betriebsspannung (V_{BAT}) und Masse liegt, wobei ein Steuereingang (14) des Transistors (T) mit dem Mittelabgriff (9) des Terminierungsnetzwerkes (8) verbunden ist.

4. Steuergerät nach einem der vorangegangenen Ansprüche, **dadurch gekennzeichnet, dass** dem Aufwachmodul (15) mindestens ein Filter (L, 17) zugeordnet ist, um hochfrequente Gleichtaktstörungen zu unterdrücken.

5. Ethernet-Bus (1), umfassend mindestens zwei Steuergeräte (2, 3), wobei die Steuergeräte (2, 3) jeweils einen Bustreiber (4) und einen Mikroprozessor (5) aufweisen, wobei mindestens das erste Steuergerät (2) ein Steuergerät nach einem der vorangegangenen Ansprüche ist.

6. Ethernet-Bus (1) nach Anspruch 5, **dadurch gekennzeichnet, dass** das zweite Steuergerät (3) ebenfalls einen Spannungsregler (10) mit zwei Spannungswerten aufweist und eine Schaltung (11) zugeordnet ist, um die Spannung am Mittelabgriff (9) für den Spannungsregler (10) auszuwerten.

7. Ethernet-Bus (1) nach Anspruch 5 oder 6, **dadurch gekennzeichnet, dass** dem ersten und zweiten Steuergerät (2, 3) jeweils ein Aufwachmodul (15) zugeordnet ist.

8. Ethernet-Bus (1) nach Anspruch 7, **dadurch gekennzeichnet, dass** das Aufwachmodul des zweiten Steuergerätes (3) einen Eingang (16) für ein Aufwachereignis (5) und einen Ausgang für den Mittelabgriff (9) des Terminierungsnetzwerks (8) aufweist,
wobei das Aufwachmodul (15) derart ausgebildet ist, dass in Abhängigkeit eines Aufwachereignisses (S) ein Spannungssignal erzeugt wird, um die Spannung am Mittelabgriff (9) des zweiten Steuergerätes (3) mit dem Spannungsregler (10) zu verändern, wobei dem mindestens einen Spannungsregler (10) eine Schaltung (11) zugeordnet ist, mittels derer der Spannungsregler (10) in Abhängigkeit der Spannung am Mittelabgriff (9) vom ersten Spannungswert auf den zweiten Spannungswert geregelt wird

9. Ethernet-Bus (1) nach Anspruch 8, **dadurch gekennzeichnet, dass** die an dem Spannungsregler (10) des zweiten Steuergerätes (3) zugeordnete Schaltung (11) einen Widerstand (R) und einen Transistor (T) aufweist, die einen Spannungsteiler bilden, wobei ein Steuereingang (13) des Spannungsreglers (10) mit einem Mittelabgriff (12) des Spannungsteilers verbunden ist, wobei der Spannungsteiler zwischen einer Betriebsspannung (V_{BAT}) und Masse liegt, wobei ein Steuereingang (14) des Transistors (T) mit dem Mittelabgriff (9) des Terminierungsnetzwerkes (8) verbunden ist.

10. Ethernet-Bus (1) nach einem der Ansprüche 5-9, **dadurch gekennzeichnet, dass** dem Aufwachmodul (15) des zweiten Steuergerätes (3) mindestens ein Filter (L, 17) zugeordnet ist, um hochfrequente Gleichtaktstörungen zu unterdrücken.

11. Verfahren zum Aufwecken eines Steuergerätes (2, 3) eines Ethernet-Busses (1), wobei das Steuergerät (2, 3) einen Bustreiber (4), einen Mikroprozessor (5) und einen Spannungsregler (10) aufweist, der mindestens zwei Spannungswerte für die Betriebsspannung (Vcc) des Steuergerätes (2, 3) einstellen kann, wobei ein erster Spannungswert für einen Betriebszustand "Schlafen" und der zweite Spannungswert für einen Betriebszustand "Kommunikation" vorgesehen ist, wobei der Bustreiber (4) mit mindestens zwei Busleitungen (6, 7) verbunden ist, wobei an den Busleitungen (6, 7) ein Terminierungsnetzwerk (8) angeschlossen ist, das mindestens zwei Widerstände (R1, R2) und einen Kondensator (C3) aufweist, **dadurch gekennzeichnet, dass** die beiden Widerstände (R1, R2) mit jeweils
einer Busleitung (6, 7) verbunden sind und an einem Mittelabgriff (9) des Terminierungsnetzwerkes (8) miteinander verbunden sind, wobei der Kondensator (C3) des Terminierungsnetzwerkes (8) zwischen Mittelabgriff (9) und Masse angeordnet ist, wobei ein Aufwachmodul (15) vorgesehen ist, das in Abhängigkeit eines Aufwachereignisses (S) ein Spannungssignal erzeugt, um die Spannung am Mittelabgriff (9) zu verändern, wobei über eine Schaltung (11) diese Spannungsänderung am Mittelabgriff (9) erfasst wird und der Spannungsregler (10) vom ersten Spannungswert auf den zweiten Spannungswert geregelt wird.

## Claims

1. A control device (2, 3) for an Ethernet bus (1), comprising a bus driver (4), a microprocessor (5) and a voltage regulator (10), wherein the voltage regulator (10) has at least two voltage values for the operating voltage (V_{cc}) of the control device (2, 3), wherein a first voltage value is provided for a "sleep" operating state and the second voltage value for a "communication" operating state, wherein the control device (2, 3) has a termination network (8), which has at least two resistors (R1, R2) and a capacitor (C3),
**characterized in that**
in each case a resistor (R1, R2) is connected to a connection for the bus line (6, 7) and the two resistors (R1, R2) are connected to one another at a center tap (9), wherein the capacitor (C3) is arranged between the center tap (9) and earth,
the control device (2, 3) has a wake-up module (15), that has an input (16) for a wake-up event (5) and an output for the center tap (9) of the termination network (8),
wherein the wake-up module (15) is designed in such a manner that a voltage signal is generated in dependence on a wake-up event (S), in order to change the voltage at the center tap (9) of the control device (2) using the voltage regulator (10), wherein a circuit (11) is assigned to the at least one voltage regulator (10), by means of which the voltage regulator (12) is regulated from the first voltage value to the second voltage in dependence on the voltage at the center tap (9).

2. A control device according to Claim 1, **characterized in that** the wake-up module (15) is integrated in the control device (2, 3).

3. A control device according to Claim 1 or Claim 2, **characterized in that** the circuit (11) has a resistor (R) and a transistor (T), which form a voltage divider, wherein a control input (13) of the voltage regulator (10) is connected to a center tap (12) of the voltage divider, wherein the voltage divider is located between an operating voltage (V_{BAT}) and earth, wherein a control input (14) of the transistor (T) is connected to the center tap (9) of the termination network (8).

4. A control device according to any one of the preceding claims, **characterized in that** at least one filter (L, 17) is assigned to the wake-up module (15), in order to suppress high-frequency common-mode interferences.

5. An Ethernet bus (1), comprising at least two control devices (2, 3), wherein the control devices (2, 3) in each case have a bus driver (4) and a microprocessor (5), wherein at least the first control device (2) is a control device according to any one of the preceding claims.

6. An Ethernet bus (1) according to Claim 5, **characterized in that** the second control device (3) also has a voltage regulator (10) with two voltage values and a circuit (11) is assigned, in order to evaluate the voltage at the center tap (9) for the voltage regulator (10).

7. An Ethernet bus (1) according to Claim 5 or 6, **characterized in that** a wake-up module (15) is assigned in each case to the first and second control device (2, 3).

8. An Ethernet bus (1) according to Claim 7, **characterized in that** the wake-up module of the second control device (3) has an input (16) for a wake-up event (5) and an output for the center tap (9) of the termination network (8), wherein the wake-up module (15) is designed in such a manner that a voltage signal is generated in dependence on a wake-up event (S), in order to change the voltage at the center tap (9) of the second control device (3) using the voltage regulator (10), wherein a circuit (11) is assigned to the at least one voltage regulator (10), by means of which the voltage regulator (10) is regulated from the first voltage value to the second voltage value in dependence on the voltage at the center tap (9).

9. An Ethernet bus (1) according to Claim 8, **characterized in that** the circuit (11) assigned to the voltage regulator (10) of the second control device (3) has a resistor (R) and a transistor (T), which form a voltage divider, wherein a control input (13) of the voltage regulator (10) is connected to a center tap (12) of the voltage divider, wherein the voltage divider is located between an operating voltage (V_{BAT}) and earth, wherein a control input (14) of the transistor (T) is connected to the center tap (9) of the termination network (8).

10. An Ethernet bus (1) according to any one of Claims 5-9, **characterized in that** at least one filter (L, 17) is assigned to the wake-up module (15) of the second control device (3), in order to suppress high-frequency common-mode interferences.

11. A method for waking up a control device (2, 3) of an Ethernet bus (1), wherein the control device (2, 3) has a bus driver (4), a microprocessor (5) and a voltage regulator (10), which can set at least two voltage values for the operating voltage (V_{cc}) of the control device (2, 3), wherein a first voltage value is provided for a "sleep" operating state and the second voltage value for a "communication" operating state, wherein the bus driver (4) is connected to at least two bus lines (6, 7), wherein a termination network (8) is connected to the bus lines (6, 7), which termination network has at least two resistors (R1, R2) and a capacitor (C3), **characterized in that** the two resistors (R1, R2) are connected in each case to a bus line (6, 7) and are connected to one another at a center tap (9) of the termination network (8), wherein the capacitor (C3) of the termination network (8) is arranged between center tap (9) and earth, wherein a wake-up module (15) is provided, which generates a voltage signal in dependence on a wake-up event (S), in order to change the voltage at the center tap (9), wherein this voltage change at the center tap (9) is detected via a circuit (11) and the voltage regulator (10) is regulated from the first voltage value to the second voltage value.

## Revendications

1. Appareil de commande (2, 3) pour un bus Ethernet (1), comprenant un pilote de bus (4), un microprocesseur (5) et un régulateur de tension (10), le régulateur de tension (10) présentant au moins deux valeurs de tension pour la tension de service (Vcc) de l'appareil de commande (2, 3), une première valeur de tension étant prévue pour un mode de fonctionnement « sommeil » et la deuxième valeur de tension étant prévue pour un mode de fonctionnement « communication », l'appareil de commande (2, 3) comprenant un réseau de terminaison (8) qui comprend au moins deux résistances (R1, R2) et un condensateur (C3),
**caractérisé en ce que**
une résistance (R1, R2) est relié avec un raccord pour une ligne de bus (6, 7) et les deux résistances (R1, R2) sont reliées entre elles au niveau d'une prise centrale (9), le condensateur (C3) étant disposé entre la prise centrale (9) et la masse,
l'appareil de commande (2, 3) comprenant un module de réveil (15) qui comprend une entrée (16) et pour un événement de réveil (5) et une sortie pour la prise centrale (9) du réseau de terminaison (8),
le module de réveil (15) étant conçu de façon à ce que, en fonction d'un événement de réveil (S), un signal de tension soit généré afin de modifier la tension au niveau de la prise centrale (9) de l'appareil de commande (2) avec le régulateur de tension (10), moyennant quoi, à l'au moins un régulateur de tension (10) correspond un circuit (11) au moyen duquel le régulateur de tension (10) est régulé, en fonction de la tension au niveau de la prise centrale (9), de la première valeur de tension à la deuxième valeur de tension.

2. Appareil de commande selon la revendication 1, **caractérisé en ce que** le module de réveil (15) est intégré dans l'appareil de commande (2, 3).

3. Appareil de commande selon la revendication 1 ou la revendication 2, **caractérisé en ce que** le circuit (11) comprend une résistance (R) et un transistor (T) qui forment un diviseur de tension, une entrée de commande (13) du régulateur de tension (10) étant relié avec une prise centrale (12) du diviseur de tension, le diviseur de tension se trouvant entre une tension de service (V_{BAT}) et la masse, une entrée de commande (14) du transistor (T) étant reliée avec la prise centrale (9) du réseau de terminaison (8).

4. Appareil de commande selon l'une des revendications précédentes, **caractérisé en ce que**, au module de réveil (15), correspond au moins un filtre (L, 17), afin d'atténuer les parasites de mode commun à haute fréquence.

5. Bus Ethernet (1) comprenant au moins deux appareils de commande (2, 3), les appareils de commande (2, 3) comprenant chacun un pilote de bus (4) et un microprocesseur (5), au moins le premier appareil de commande (2) étant un appareil de commande selon l'une des revendications précédentes.

6. Bus Ethernet (1) selon la revendication 5, **caractérisé en ce que** le deuxième appareil de commande (3) comprend également un régulateur de tension (10) avec deux valeurs de tension et un circuit (11) afin d'analyser la tension au niveau de la prise centrale (9) pour le régulateur de tension (10).

7. Bus Ethernet (1) selon la revendication 5 ou 6, **caractérisé en ce que**, à chacun des premier et deuxième appareils de commande (2, 3), correspond un module de réveil (15).

8. Bus Ethernet (1) selon la revendication 7, **caractérisé en ce que** le module de réveil du deuxième appareil de commande (3) comprend une entrée (16) pour un événement de réveil (5) et une sortie pour la prise centrale (9) du réseau de terminaison (8), le module de réveil (15) étant conçu de façon à ce que, en fonction d'un événement de réveil (S), un signal de tension soit généré afin de modifier la tension au niveau de la prise centrale (9) du deuxième appareil de commande (3) avec le régulateur de tension (10), moyennant quoi, à l'au moins un régulateur de tension (10), correspond un circuit (11) au moyen duquel le régulateur de tension (10) est régulé, en fonction de la tension au niveau de la prise centrale (9), de la première valeur de tension à la deuxième valeur de tension.

9. Bus Ethernet (1) selon la revendication 8, **caractérisé en ce que** le circuit (11) correspondant au régulateur de tension (10) du deuxième appareil de commande (3) comprend une résistance (R) et un transistor (T), qui forment un diviseur de tension, une entrée de commande (13) du régulateur de tension (10) étant reliée avec une prise centrale (12) du diviseur de tension, le diviseur de tension se trouvant entre une tension de service (V_{BAT}) et la masse, une entrée de commande (14) du transistor (T) étant reliée avec la prise centrale (9) du réseau de terminaison (8).

10. Bus Ethernet (1) selon l'une des revendications 5 à 9, **caractérisé en ce que**, au module de réveil (15) du deuxième appareil de commande (3) correspond au moins un filtre (L, 17), afin d'atténuer les parasites de mode commun à haute fréquence.

11. Procédé de réveil d'un appareil de commande (2, 3) d'un bus Ethernet (1), l'appareil de commande (2, 3) comprenant un pilote de bus (4), un microprocesseur (5) et un régulateur de tension (10), qui peut régler au moins deux valeurs de tension pour la tension de service (Vcc) de l'appareil de commande (2, 3), une première valeur de tension étant prévue pour un mode de fonctionnement « sommeil » et la deuxième valeur de tension étant prévue pour le mode de fonctionnement « communication », le pilote de bus (4) étant relié avec au moins deux lignes de bus (6, 7), moyennant quoi, aux lignes de bus (6, 7), est connecté un réseau de terminaison (8) qui comprend au moins deux résistances (R1, R2) et un condensateur (C3), **caractérisé en ce que** les deux résistances (R1, R2) sont reliées chacune avec une ligne de bus (6, 7) et sont reliées entre elles au niveau d'une prise centrale (9) du réseau de terminaison (8), le condensateur (C3) du réseau de terminaison (8) étant disposé entre la prise centrale (9) et la masse, un module de réveil (15) étant prévu, qui génère, en fonction d'un événement de réveil (S), un signal de tension, afin de modifier la tension au niveau de la prise centrale (9), moyennant quoi, par l'intermédiaire d'un circuit (11), cette modification de tension est détectée au niveau de la prise centrale (9) et le régulateur de tension (10) est régulé de la première valeur de tension à la deuxième valeur de tension.
